# EUROPEAN PATENT SPECIFICATION

(11) **EP 2 501 244 B1**
(45) Date of publication and mention of the grant of the patent: **10.01.2018**
(21) Application number: 10781492.3
(22) Date of filing: 18.11.2010
(51) Int. Cl.: A23P 10/25, A23L 7/143

(54) **A MACHINE FOR PRODUCING MAZLUGA**
MASCHINE ZUR HERSTELLUNG VON MAZLUGA
MACHINE POUR PRODUIRE DU MAZLUGA

(30) Priority: 19.11.2009 IT MI20092039
(43) Date of publication of application: 26.09.2012
(73) Proprietor: Les Pâtes Warda SA, 4003 Sousse (TN)
(72) Inventor: BIANCHI, Adolfo, 44047 Dosso, S. Agostino (IT)
(74) Representative: Mittler, Enrico
(86) International application number: PCT/EP2010/067725
(87) International publication number: WO 2011/061245

(56) References cited:
- WO-A1-2004/032650
- FR-A- 920 814
- FR-A1- 2 339 344
- US-A- 4 344 975

## Description

The present invention relates to a machine for producing Mazluga.

The product Mazluga is a typical semolina-based (usually of durum wheat) Arab food having granular format. Its consistency is very different with respect to pasta formats of similar shape and size but obtained by extrusion with regular procedures. Therefore the production of Mazluga meets different needs with respect to the aforesaid pasta.

It is currently obtained by laborious and lengthy manual processing. The manual procedure for making Mazluga comprises two main steps.

The first step consists in mixing durum wheat flour and water in doses such as to form granules having rounded shape and of sizes between 3 and 5 mm, by agglomerating a sufficient quantity of semolina grains to reach such sizes without however obtaining a dough. The product obtained is passed through sieves having adequate mesh sizes for obtaining the minimum and maximum granulometry wanted. Such granules are then dried, and the product thus obtained has on average a moisture content of about 12%.

In the second preparation step, the granules thus obtained are gradually moistened again at the same speed as their absorption capacity to keep them from sticking to each other. During this step the person in charge should manually moisten and simultaneously mix the product to prevent sticking. It should be rolled while stretching it with the palm of the hand to try making the granules as round as possible. The combined action of the moistening and of the rolling causes a certain quantity of starch to escape, which forms a superficial layer on the granule itself. This step may last from 40 to 50 minutes, the time required so that the pellet is moistened up to the nucleus.

Then the product obtained is dried again. The final step is sifting to separate the different sizes of the granules into three sizes: large, medium and fine.

Mazluga is a by-product from processing cous cous, which may be considered concluded with the completion of the first processing step of the semolina and the selection of the fine granulometry.

FR-2339344, US-4344975, WO-2004/032650 and FR-920814 disclose machines for automatically producing granular food products.

It is the object of the present invention to obviate the aforesaid drawbacks by proposing a machine with high productivity capable of reproducing the operations of the second processing step and which does not show the effects of the restrictions typical of manual processing.

In accordance with the invention such an object is achieved with a machine for automatically producing a granular food product as disclosed in claim 1.

Advantageously the machine the object of the present invention is conceived to industrialize the production of Mazluga and in particular, to make continuous such a production process by precisely simulating the manual operations executed by the traditional operators, in particular the operations described in the second processing step, which is implemented on the larger granulometries generated by the first processing step.

These and other features of the present invention will become increasingly apparent from the following detailed description of one of its non-limiting practical embodiment examples disclosed in the accompanying drawings, in which:
figure 1 shows a top view of a machine according to the invention;
figure 2 shows a longitudinal sectional view according to the line II-II in figure 2;
figure 3 shows a cross-section view according to the line III-III in figure 2;
figure 4 shows a side view of the motorized mixer;
figure 5 shows a perspective view of an arm of a mixer with processing blades;
figure 6 shows a processing blade;
figure 7 shows a perspective view of an arm of a mixer with a processing blade;
figure 8 shows a top view of a doctor blade;
figure 9 shows a cross-section view according to the line IX-IX in figure 8;
figure 10 shows a perspective view of a smoothing machine according to the invention;
figure 11 shows a side view of a system for producing Mazluga;
figure 12 shows a partially cross-sectioned perspective view of an arm of a mixer with a processing blade and a doctor blade.

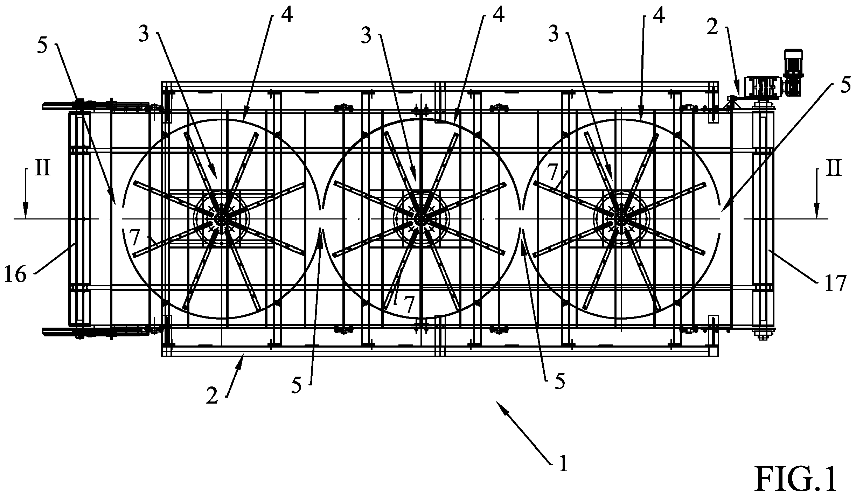

With reference to the accompanying figures, and in particular to figures 1, 2 and 3, the machine 1 is noted for automatically producing a granular food product such as is Mazluga, obtained starting from granules of a grain semolina, in particular durum wheat flour.

Said machine 1 comprises a frame 2 and a plurality of consecutive motorized rotating mixers 3 associated therewith with vertical rotation axis, each contained in a fixed side containment ring 4, with vertical symmetry of axis substantially corresponding to said vertical rotation axis of the mixers 3, consisting of a vertical metal annular wall 44 equipped with apertures 5 for the communication between consecutive rings 4.

The ring 4 is lacking bottom and serves the function of containing the granular product sideways with respect to the generally centrifugal action of the mixers 3.

The machine 1 also comprises two horizontal conveyor belts, one upper 6 and one lower 26 under the containment rings 4 made integral with the frame 2. The frame support 2 permits the rings 4 not to burden the belts 6, 26 with their weight thus permitting the sliding thereof and at the same time the containment of the product. The lower edge of the wall 44 of the ring 4 is substantially flushed with the conveyor belts 6, 26 so as to perform the containing action without jeopardizing the sliding of the belts 6, 26 which therefore invite the product to exit the ring 4 through the apertures 5.

In the present embodiment of the machine 1, as apparent by the figures 1-3, three consecutive coplanar upper mixers 3 are provided, above the upper conveyor belt 6, and three consecutive coplanar lower mixers 3 are provided above the lower conveyor belt 26.

The conveyor belts 6, 26 transport the product through each mixer 3 and through one mixer 3 and the other by making it pass through the openings 5. Each ring 4 provides an inlet aperture 5 of the product and an outlet aperture 5 of the product.

Each mixer 3 provides a motorized rotating cylindrical upright 33, with vertical rotation axis, which supports a plurality of rectilinear horizontal arms 7, angularly equidistant, adapted to support processing means 8, 11, 13, 14, 15 (figures from 5 to 10) adapted to automatically replicate the traditional manual processing described above.

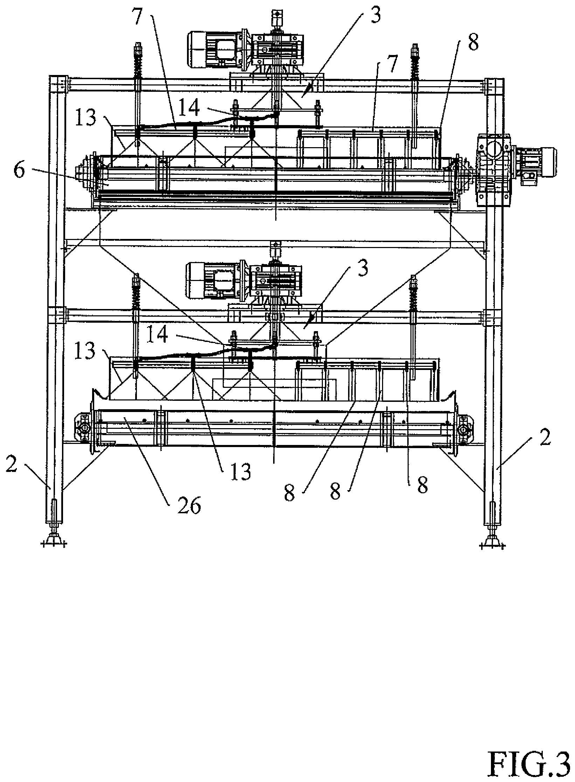

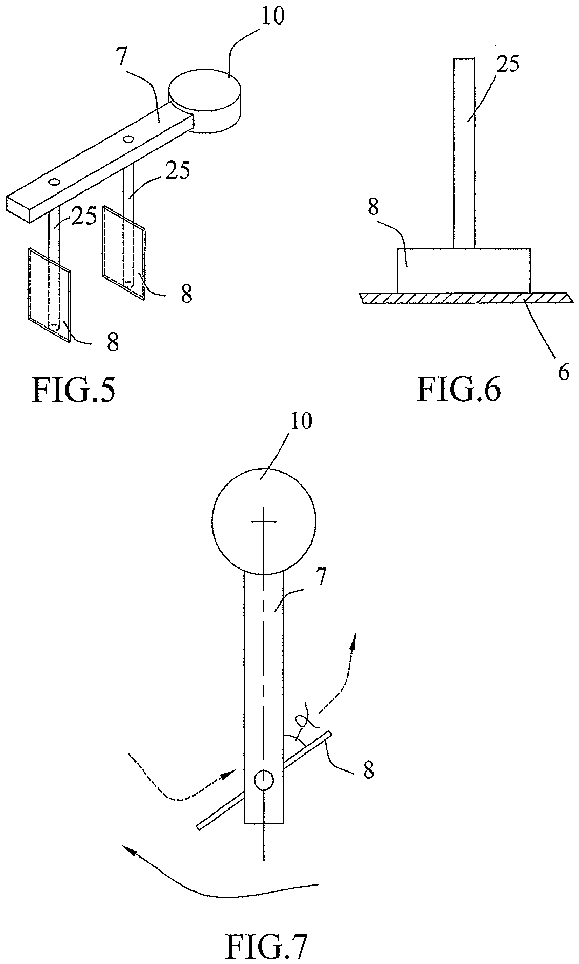

In detail, these simulation means of the manual work comprise a plurality of processing blades 8 shown in figure 3 in a first embodiment with blades 8 throughout its height, and figures 5, 6 and 7 for a second embodiment, with blades 8 at reduced height borne by a vertical element 25 integral with the arm 7 of the mixer 3. The two embodiments of blade 8 are equivalent.

With respect to the directrix of the support arm 7, said blades 8 are inclined by an angle α (figure 7) less than 90° in the opposite rotation direction of the arm 7, and serve to process the semi-finished product by simulating the stretching obtained with the hands, as they skim along the conveyor belt 6 and/or 26 (figure 6), and also to move the semi-finished product itself towards the middle 10 of the ring 4. The particular inclination of the blades 8 with respect to the rotation direction of the mixer 3 tends to move the product towards the middle 10 of the ring 4.

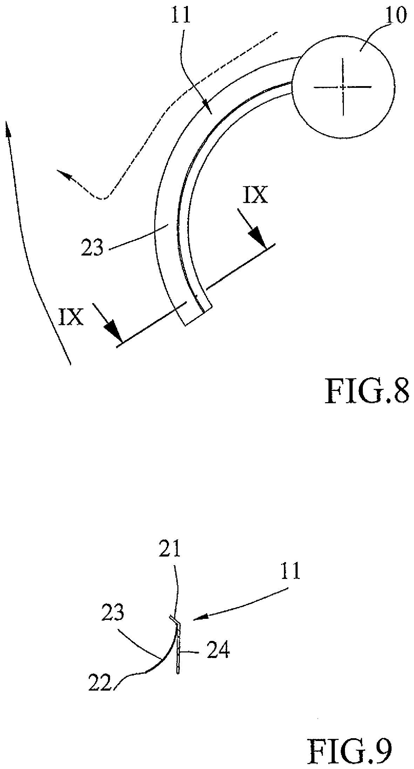

The means for simulating the manual processing also comprise at least a doctor blade 11 (figures 8 and 9) curved backwards with respect to the rotation direction of the mixer 3, i.e. having a curvature with head convexity with respect to the rotation direction of the mixer 3.

Said doctor blade 11 skims along the conveyor belt 6 below due to the profile shown in figure 9 with the function of moving the product which it intercepts towards the aperture 5 distant from the middle 10.

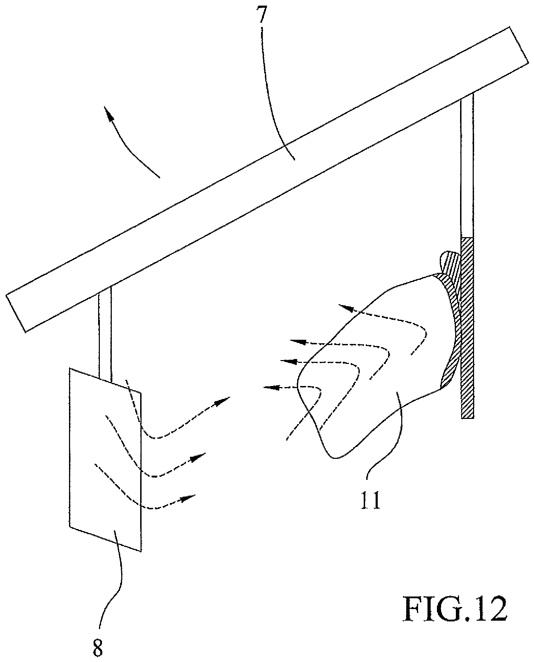

In particular, the doctor blade 11 (figure 9) consists of a strip of substantially vertical plate 24 and a curved profile in concave plate 23, inclined with respect to a vertical plane (figure 12), soldered to said strip 24 at a curved upper portion 21. The lower end 22 skims along the conveyor belt below without contact, while the front side 23 collects the product with its profile by pushing it towards the outside without stretching it.

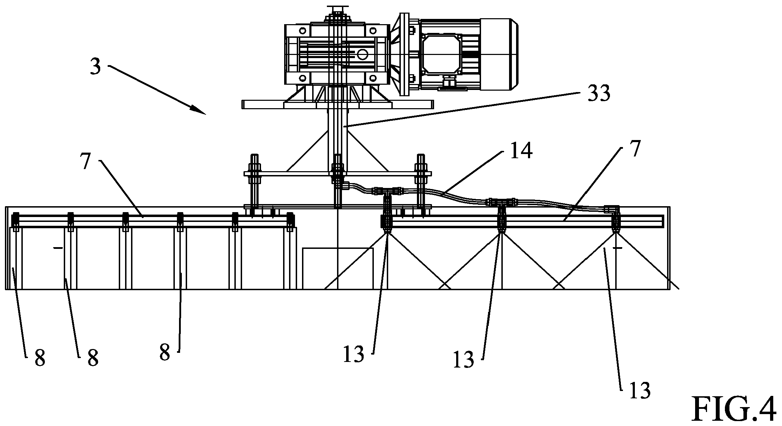

The means for simulating the manual processing also comprise a plurality of water atomization nozzles 13 (figure 4), for moistening the semi-finished product, arranged on one of the arms 7 of each mixer 3. A water dosage system 14 (figure 4) is associated with the nozzles 13 complete with modulating valves and with flowmeters for distributing the correct quantity of water at the passing of the semi-finished product.

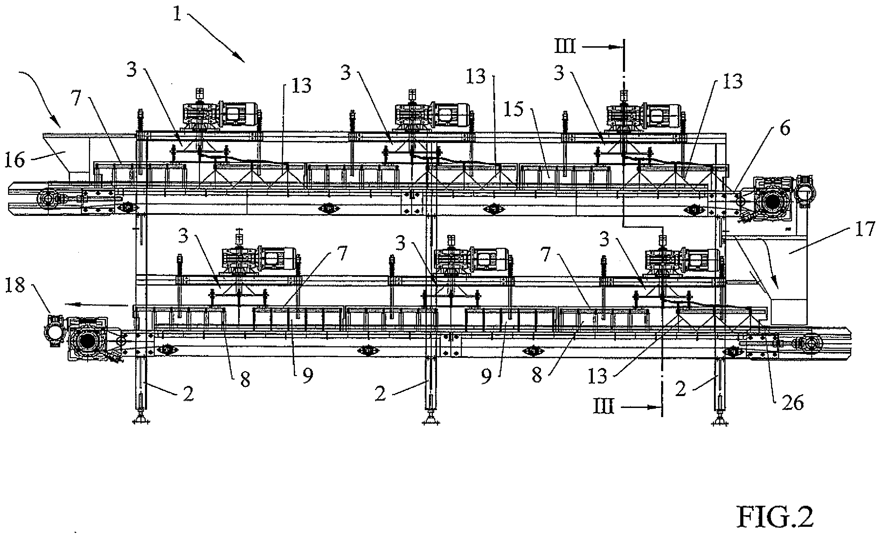

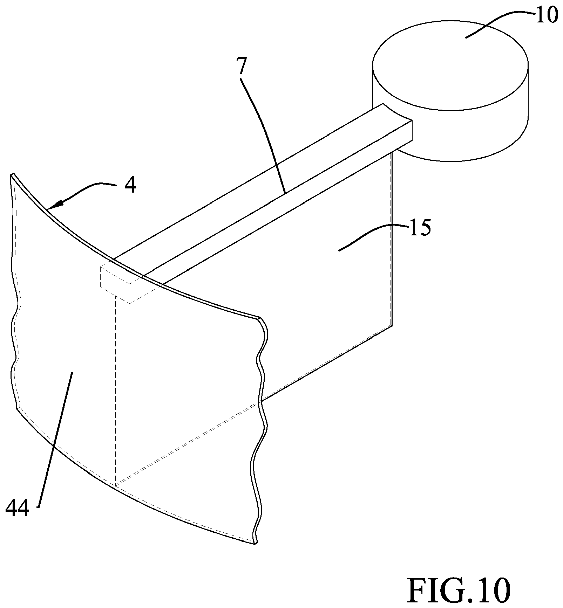

Said processing means of the product also comprise a smoothing means or smoothing machine 15 (figures 2 and 10) aligned with the arm 7 so that by passing over the product, which is in a flowing state, it levels it to a given level. The smoothing machine 15 may also be in flexible material, and should pass over the product without stretching it.

In the embodiment illustrated in figure 2, the machine 1 comprises an inlet hopper 16 arranged upstream from the upper belt 6, an intermediate connecting hopper 17 between the upper belt 6 and the lower one 26 and an outlet hopper 18 arranged downstream from the lower belt 26.

The machine 1 may also comprise a granule forming and selecting unit (not shown here) upstream from the upper conveyor belt 6 and a product drying module (also not depicted here and alternatively to the natural outdoors drying) downstream from the lower conveyor belt 26.

The operation of the machine 1 is the following.

The initial semi-finished product in shape of granules is inserted in the inlet hopper 16 and ends up inside the first ring 4 above the upper conveyor belt 6. The mixer 3 contained therein rotates and thus places the arms 7 in rotation including an arm 7 bearing the nozzles 13 for the scheduled atomization of water. Such an atomization varies in quantity and/or time from the first to the last mixer 3, in accordance with the Mazluga recipe.

Typically, each mixer 3 has eight arms 7, one of which dedicated to the atomizers 13, one to the smoothing machine 15, two to two doctor blades 11, and the remaining four to the processing blades 8.

By stretching the product between themselves and the conveyor belt 6, 26, the processing blades 8 emulate the hand stretching action of the product for extracting the starch.

The combined action of inclining the blades 8 and of the doctor blade 11 moves the product from the periphery to the middle and from the middle to the periphery of the mixer 3, thus obtaining a remixing which promotes the homogenous processing quality. On this subject the effect of the processing blades 8 and of the doctor blade 11 is shown in figures 7, 8 and 12 in which the trajectory of the semi-finished product is noted by the respective broken arrows, while the rotation direction of the mixer 3 is indicated by the solid arrow.

The stretching operation of the granule product is therefore repeated several times inside each ring 4 before the granule leaves the ring 4 to pass to the successive one through the aperture 5.

The granule is moistened by the atomizers 13 inside these cyclical passages to keep it elastic, thus promoting the extraction of the starch. The granule is supplied of the sole quantity of water which it may absorb without being reduced to the condition of dough.

At the end of the cyclical passages in each of the mixers 3, when the granule is moistened up to the nucleus, the product is ready to be dried outdoors or to enter the drying module.

In the present embodiment the product passes through three consecutive upper mixers 3 brought by the upper conveyor belt 6, to then fall due to its weight on the lower conveyor belt 26 which inversely conducts it through three further consecutive mixers 3.

The Mazluga produced with the machine 1 according to the invention has the same features of the hand-produced one with an improved granule homogeneity.

The quantity of Mazluga produced with the machine 1 according to the invention is such to be economically affordable with respect to hand production and is therefore capable of satisfying a greater number of users.

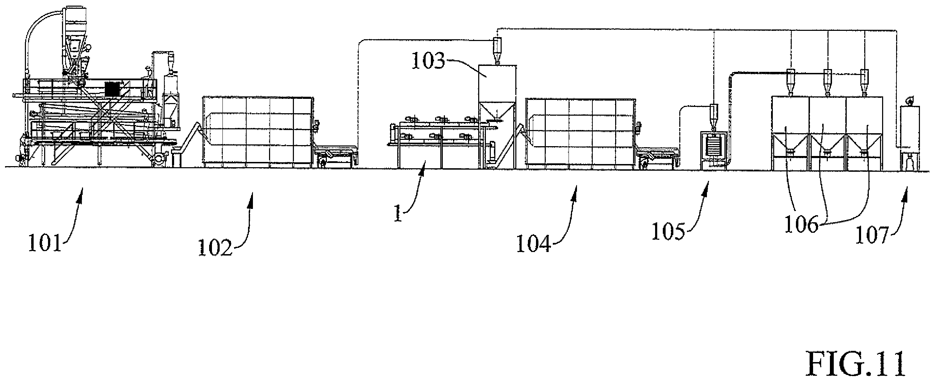

As shown in figure 11, the machine according to the present invention is part of a continuous in-line processing system 100 comprising in sequence:
- a forming and selecting unit 101 of granules consisting of grains of united semolina;
- a drying unit 102 of the product obtained and successive cooling;
- a temporary storing site 103 of the semi-finished product;
- the machine 1 according to the present invention (transformation unit);
- a drying unit 104 of the product obtained and successive cooling;
- a granulometry selecting unit 105;
- a series of storing silos 106;
- a packaging machine 107.

## Claims

1. A machine (1) for automatically producing a granular food product obtained starting from granules of a grain semolina, comprises a plurality of consecutive rotating mixers (3) with vertical rotation axis which bears horizontal arms (7), each mixer (3) being contained in a ring (4) which provides a side vertical containment wall (44) of the product with apertures (5) for the communication between consecutive rings (4), **characterized in that** said rings (4) being fixed, each of said rotating mixer (3) being motorized and providing a central rotating cylindrical upright (33) and said horizontal arms (7) being adapted to support at least a processing blade (8), at least a doctor blade (11), at least a water atomization nozzle (13) of the food product, and the machine (1) also providing at least a conveyor belt (6) arranged under the rings (4) adapted to transport horizontally the product through each mixer (3) and between one mixer (3) and the other.

2. A machine (1) according to claim 1, **characterized in that** each arm (7) supports one or more said processing blades (8) substantially associated vertically with the arm (7), said blades (8) being inclined, with respect to the directrix of the arm (7), by an angle α less than 90° in the opposite rotation direction of the mixer (3).

3. A machine (1) according to claim 1 or 2, **characterized in that** the arm (7) supports at least said doctor blade (11) being curved backwards with respect to the rotation direction of the mixer (3).

4. A machine (1) according to claim 3, **characterized in that** the arm profile of the doctor blade (11) comprises a strip of substantially vertical plate (24) and a curved profile in concave plate (23).

5. A machine (1) according to any one of the preceding claims, **characterized in that** at least one arm (7) of a mixer (3) supports a plurality of said water atomization nozzles (13) for moistening the semi-finished product.

6. A machine (1) according to claim 5, **characterized in that** it provides water dosage means (14) associated with said water atomization nozzles (13).

7. A machine (1) according to any one of the preceding claims, **characterized in that** the arm (7) supports at least a smoothing machine (15) aligned with the directrix of the arm (7).

8. A machine according to any one of the preceding claims, comprising a series of consecutive said mixers (3) being upper above said conveyor belt (6) being upper, and a series of consecutive said mixers (3) being lower above said conveyor belt (26) being lower conveyor belt (26), the product downstream from the last mixer (3) being upper falling on the lower conveyor belt (26) upstream from the first mixer (3) being lower.

9. Apparatus for automatically producing a granular food product obtained starting from granules of grain semolina, **characterized in that** it comprises in a continuous line a granule forming and selecting unit (101), a first drying module (102) of the product obtained and successive cooling, a temporary storing site (103) of the semi-finished product, a machine (1) according to any one of the preceding claims, a second drying module (104) of the product obtained and successive cooling, a granulometry selecting unit (105), a series of storing silos (106), and a packaging machine (107).

## Patentansprüche

1. Maschine (1) zum automatischen Herstellen eines körnigen Nahrungsmittelprodukts erhalten ausgehend von Körnern eines körnigen Grießes, aufweisend mehrere aufeinanderfolgende Rotationsmischer (3) mit vertikaler Rotationsachse, die horizontale Arme (7) trägt, wobei jeder Mischer (3) in einem Ring (4) untergebracht ist, der eine seitliche vertikale Eingrenzungswand (44) für das Produkt bereitstellt, mit Öffnungen (5) zur Verbindung zwischen aufeinanderfolgenden Ringen (4), **dadurch gekennzeichnet, dass** die Ringe (4) fixiert sind, jeder der Rotationsmischer (3) motorisiert ist und einen zentralen rotierenden zylindrischen Vertikalaufbau (33) vorsieht, und die horizontalen Arme (7) dazu ausgebildet sind, wenigstens ein Verarbeitungsschaufelblatt (8), wenigstens ein Streichmesser (11) und wenigstens eine Wasserzerstäubungsdüse (13) für das Nahrungsmittelprodukt zu tragen, und dass die Maschine (1) ferner wenigstens ein Förderband (6) vorsieht, das unter den Ringen (4) angeordnet dazu ausgebildet ist, das Produkt horizontal durch jeden Mischer (3) und zwischen einem Mischer (3) und dem anderen zu transportieren.

2. Maschine (1) nach Anspruch 1, **dadurch gekennzeichnet, dass** jeder Arm (7) eine oder mehrere der Verarbeitungsschaufelblätter (8) im Wesentlichen vertikal an dem Arm (7) angeschlossen trägt, wobei die Schaufelblätter (8) bezüglich der Leitlinie des Arms (7) um einen Winkel α von weniger als 90° entgegengesetzt zur Rotationsrichtung des Mischers (3) geneigt sind.

3. Maschine (1) nach Anspruch 1 oder 2, **dadurch gekennzeichnet, dass** der Arm (7) wenigstens das Streichmesser (11) trägt, welches bezüglich der Rotationsrichtung des Mischers (3) nach hinten gekrümmt ist.

4. Maschine (1) nach Anspruch 3, **dadurch gekennzeichnet, dass** das Armprofil des Streichmessers (11) einen Streifen einer im Wesentlichen vertikalen Platte (24) und ein gekrümmtes Profil in einer konkaven Platte (23) aufweist.

5. Maschine (1) nach einem der vorangehenden Ansprüche, **dadurch gekennzeichnet, dass** wenigstens ein Arm (7) eines Mischers (3) mehrere der Wasserzerstäubungsdüsen (13) zum Befeuchten des Halbfertigprodukts trägt.

6. Maschine (1) nach Anspruch 5, **dadurch gekennzeichnet, dass** sie Wasserdosiermittel (14) vorsieht, die mit den Wasserzerstäubungsdüsen (13) verbunden sind.

7. Maschine (1) nach einem der vorangehenden Ansprüche, **dadurch gekennzeichnet, dass** der Arm (7) wenigstens eine Glättungsmaschine (15) trägt, die auf die Leitlinie des Arms (7) ausgerichtet ist.

8. Maschine nach einem der vorangehenden Ansprüche, aufweisend eine Reihe von aufeinanderfolgenden oberen der Mischer (3) über dem Förderband (6), das ein oberes ist, und eine Reihe von aufeinanderfolgenden unteren der Mischer (3), über dem Förderband (26), das ein unteres Förderband (26) ist, wobei das Produkt stromabwärts des letzten der oberen Mischer (3) stromaufwärts des ersten der unteren Mischer (3) auf das untere Förderband (26) fällt.

9. Vorrichtung zum automatischen Herstellen eines körnigen Nahrungsmittelprodukts erhalten ausgehend von Körnern eines körnigen Grießes, **dadurch gekennzeichnet, dass** sie in einer durchgehenden Linie aufweist: eine Körnchen formende und selektierende Einheit (101), ein erstes Trocknungsmodul (102) für das erhaltene Produkt und nachfolgende Kühlung, einen Platz (103) zum vorübergehenden Lagern des Halbfertigprodukts, eine Maschine (1) nach einem der vorangehenden Ansprüche, ein zweites Trocknungsmodul (104) für das erhaltene Produkt und nachfolgende Kühlung, eine Granulometrie-Selektionseinheit (105), eine Reihe von Lagersilos (106), und eine Verpackungsmaschine (107).

## Revendications

1. Une machine (1) pour la production automatique d'un produit alimentaire granulaire à partir de granules de semoule de grains comprend une pluralité de mixeurs rotatifs consécutifs (3) ayant un axe de rotation vertical qui supporte des bras horizontaux (7), chaque mixeur (3) étant contenu dans un anneau (4) qui crée une paroi de contention verticale latérale (44) du produit avec des ouvertures (5) pour la communication entre des anneaux consécutifs (4), **caractérisée en ce que** lesdits anneaux (4) sont fixes, chacun desdits mixeurs rotatifs (3) étant motorisé et créant une verticale cylindrique rotative centrale (33) et lesdits bras horizontaux (7) étant aptes à supporter au moins une lame de traitement (8), au moins une lame docteur (11), au moins une buse de pulvérisation d'eau (13) du produit alimentaire et la machine (1) prévoyant au moins une bande transporteuse (6) disposée sous les anneaux (4) et apte à transporter horizontalement le produit à travers chaque mixeur (3) et entre un mixeur (3) et l'autre.

2. Machine (1) selon la revendication 1, **caractérisée en ce que** chaque bras (7) supporte une ou plusieurs dites lames de traitement (8) substantiellement associées verticalement au bras (7), lesdites lames (8) étant inclinées par rapport à la direction du bras (7) suivant un angle α inférieur à 90° dans le sens de rotation opposé à celui du mixeur (3).

3. Machine (1) selon la revendication 1 ou 2, **caractérisée en ce que** le bras (7) supporte au moins ladite lame docteur (11) qui est courbée vers l'arrière par rapport au sens de rotation du mixeur (3).

4. Machine (1) selon la revendication 3, **caractérisée en ce que** le profil de bras de la lame docteur (11) comprend une bande de plaque substantiellement verticale (24) et un profil courbé dans la plaque concave (23).

5. Machine (1) selon l'une quelconque des revendications précédentes, **caractérisée en ce qu'**au moins un bras (7) d'un mixeur (3) supporte une pluralité desdites buses de pulvérisation d'eau (13) pour humidifier le produit semi-fini.

6. Machine (1) selon la revendication 5, **caractérisée en ce qu'**elle prévoit un moyen de dosage d'eau (14) associé auxdites buses de pulvérisation d'eau (13).

7. Machine (1) selon l'une quelconque des revendications précédentes, **caractérisée en ce que** le bras (7) supporte au moins une machine de lissage (15) alignée avec la direction du bras (7).

8. Machine (1) selon l'une quelconque des revendications précédentes, comprenant une série dedits mixeurs consécutifs (3) qui sont en position supérieure au-dessus de ladite bande transporteuse (6) qui est en position supérieure, et une série dedits mixeurs consécutifs (3) qui sont en position inférieure au-dessus de ladite bande transporteuse (26) qui est la bande transporteuse inférieure (26), le produit en aval du dernier mixeur (3) qui est en position supérieure tombant sur la bande transporteuse inférieure (26) en amont du premier mixeur (3) qui est en position inférieure.

9. Appareil pour la production automatique d'un produit alimentaire granulaire à partir de granules de semoule de grains, **caractérisée en ce qu'**il comprend en une ligne continue une unité de formage et de sélection de granules (101), un premier module de séchage (102) du produit obtenu et de refroidissement successif, un site de stockage temporaire (103) du produit semi-fini, une machine (1) selon l'une quelconque des revendications précédentes, un second module de séchage (104) du produit obtenu et de refroidissement successif, une unité de sélection de granulométrie (105), une série de silos de stockage (106) et une machine d'emballage (107).
